# EUROPEAN PATENT SPECIFICATION

(11) **EP 1 310 858 B1**
(45) Date of publication and mention of the grant of the patent: **29.07.2009**
(21) Application number: 01126785.3
(22) Date of filing: 09.11.2001
(51) Int. Cl.: G06F 1/16

(54) **External wireless connected expansion device for handheld computers**
Externe drahtlosen Expansionsvorrichtung für mobile Rechner
Dispositif d'expansion externe relié sans fil pour les ordinateurs portables

(43) Date of publication of application: 14.05.2003
(73) Proprietor: Sony Deutschland GmbH, 10785 Berlin (DE)
(72) Inventor: Löbbert, Johannes, Advanced Technology Center, Heinrich-Hertz-Str. 1, 70327 Stuttgart (DE)
(74) Representative: Rupp, Christian

(56) References cited:
- US-A- 5 781 798
- US-A1- 2001 022 719

## Description

### FIELD AND BACKGROUND OF THE INVENTION

The underlying invention generally relates to the field of mobile computing, wireless communication, and mobile multimedia applications in mobile communication networks with high-speed access. Particularly, it refers to defining a way to decouple mobile Smart Handheld Devices (SHDs) and the expansion ports for these portable mobile devices. Thereby, an approach is disclosed which leads to smaller devices with less power consumption giving at the same time more extension possibilities.

### BRIEF DESCRIPTION OF THE PRESENT STATE OF THE ART

Personal Digital Assistants (PDAs) are becoming increasingly ubiquitous, and technology such as Bluetooth and the IEEE 802.11 standard will bring PDAs into close interactive communication with other types of devices. Furthermore, cellular phones and pagers, which are primarily used for communication, are increasingly becoming programmable. Today, it is investigated how these kinds of SHDs can be used with all kinds of home, office, and factory equipment. The concept is that people can use their own SHDs, e.g. to control a photocopier in an office, a machine tool in a factory, the lights or a video cassette recorder at home, and almost any other kind of electronic device.

In addition to the capability to attach a PDA to a desktop or portable PC in order to allow a synchronization of calendars, emails, contact lists, and other personal data, PDAs are increasingly extended by attachment of a cell phone, printer, additional memory module, modem, or other peripheral devices.

Many PDAs also have either a Universal Serial Bus (USB) or a serial port. An USB or serial cable can be attached to the port, or the entire device can be inserted into a cradle that provides an USB or serial connection to a desktop or portable PC, or to USB or serial devices. They may also support one of the following expansion interfaces, thereby facilitating the connection peripherals, addition of memory or provision of network connectivity. Each interface accommodates a specific type of card that is inserted into the interface:
- The Springboard interface is a proprietary interface designed by Handspring for their Visor family (Palm platform) of devices. It has the largest physical volume of the peripheral cards. Furthermore, the Springboard interface provides the highest data transfer rate because it allows attached I/O devices to be connected directly to the processor bus. Besides, it can accommodate a separate battery to support higher power functions.
- CompactFlash is an industry-standard expansion interface for portable devices. It is widely supported, and although the CompactFlash card size is relatively small, it provides enough room to implement many functions. It is a popular interface for adding memory to digital cameras and portable MP3 players. In addition, serial ports, modems, Ethernet cards, cellular network attachments, and Global Positioning System (GPS) devices are implemented on CompactFlash cards. Due to this wide support, the interface is expected to be supported by many devices in the future.
- The SmartMedia interface is the proprietary design currently manufactured by Toshiba and Samsung. Toshiba has trademarked the name, but has made the specification available for free to the industry in the hope of creating a standard. Not all SmartMedia cards are interchangeable.
   Some interfaces require 5.0 V from the connecting PDA, some use 3.3 V, and others can be adapted to either voltage. Thereby, the voltage of the card must be matched to the voltage of the specific portable device.
- Memory Stick was developed by Sony and Fujitsu, the Memory Stick media are relatively small and, thus, accommodate relatively few functions. Its most common use is as a memory platform. There is a Memory Stick format supported by the music industry called Magic Gate. Magic Gate supports the Secure Digital Music Initiative (SDMI) specification designed to eliminate illegal copying and distribution of copyrighted content over the Internet. Sony is driving this interface to become an industry standard, and it appears in various consumer devices such as digital cameras and portable MP3 players.
- MultiMediaCard was created by a joint agreement between Siemans, Hitachi and Sandisk. The MultiMediaCard has the size of a postage stamp and is designed to provide a small memory storage medium for portable MP3 music players. Its small size limits its ability to support a variety of other I/O attachments.
- Secure Digital is based on the MultiMediaCard interface. Furthermore, this interface also supports the SDMI specification. Similar in size to the MultiMediaCard, the Secure Digital card is used mainly for simple memory expansion. Although the specification enables the development of I/O devices using cables or other extensions, this approach can be cumbersome due to its small size. An advantage of the Secure Digital interface is that it can also accept a MultiMediaCard.

Most PDAs are provided with infrared ports, which implement the Infrared Data Association (IrDA) standard. These ports can be used to connect the PDA to a desktop or portable PC, exchange contact information with other mobiles, or connect the PDA to cell phones, printers, and other infrared devices. As the Bluetooth personal area network (PAN) technology becomes more prevalent, IrDA ports are expected to be superseded on handheld devices. Nowadays, Bluetooth networking technology is deemed as the key component in the context of techniques providing short-range wireless connectivity. The main purpose of Bluetooth is to replace cables between electronic devices, such as telephones, PDAs, laptop computers, digital cameras, printers, and fax machines by using a low-cost radio chip.

In future, SHDs that accept PC cards will be able to utilize Bluetooth PC cards. Pairing these PC card-enhanced PDAs with wireless technology based on Bluetooth yields the potential to provide a wider range of connectivity options than products by Handspring or Palm. Motorola recently released a cell phone called Timeport 270 that has a Bluetooth add-on. With a Bluetooth PC card inserted into a PDA, it can wirelessly access the Internet from the Bluetooth card on the Motorola cell phone up to 30 feet away. The Motorola cell phone receives the packets by using the Wireless Application Protocol (WAP) and transmits these packets to nearby PDAs or computers. Thereby, the user can access any WAP Web site on the Internet. The only drawback is that users must carry two separate devices - a cell phone and a PDA.

Currently, most PDAs and more and more cellular phones are equipped with an internal expansion port for media cards such as InfoSticks or multimedia cards like CompactFlash cards. Thereby, external expansion interfaces like a printer or an Access Point (AP) of a mobile network can be used in combination with a short-range radio technology like Bluetooth by applying an integrated radio module placed in an expansion port of the PDA which can be used as an InfoStick or as a CompactFlash card.

Besides, there is a plurality of other techniques according to the state of the art being closely related to the topic of the underlying invention. Briefly summarized, these techniques comprise:
- the integration of a media interface in combination with a battery with higher capacity packs devices such as the cellular phone Nokia 6212 being equipped with the Bluetooth connectivity pack,
- the combination of battery packs and interfaces for more than one media which can be attached to a Compaq iPAQ Pocket PC, and
- a chip card reader as described in the US patent 6,068,186 provided with an adapter for reading cards of different formats, especially Subscriber Identity Module (SIM) cards used in the field of mobile telephony and notably in accordance with the GSM standard.

US 2001/022719 discloses a modular computer system comprising a tablet computer and a base unit connected to each other through a radio frequency wireless link.

US 5781798 discloses a computer system which utilize periferal devices that may be added to or removed from the system has been initialized.

### DEFICIENCIES AND DISADVANTAGES OF THE KNOWN SOLUTIONS OF THE PRESENT STATE OF THE ART

If a mobile SHD provides several expansion ports such as in the dual PCMCIA jacket, the size and weight of said device are increased, thereby reducing the usability of the handheld device. Another problem arises due to the high power consumption of the applied expansion cards, which reduces the standby and usage time of the mobile SHD before its battery pack has to be recharged.

In conventional solutions according to the state of the art SHDs are equipped with only one internal expansion port used for inserting media cards. Unfortunately, this internal expansion port only supports one card format. For this reason, the user is forced to apply the given media card format and is often not able to use additional functions since these functions are not yet available for the format of media cards which can be applied to conventional SHDs.

### OBJECT OF THE UNDERLYING INVENTION

In view of the explanations mentioned above it is the primary object of the underlying invention to propose a way to reduce size and weight of conventional mobile SHDs in order to enhance their portability and usability, thereby significantly reducing their total power consumption. Furthermore, the proposed solution should provide a possibility to apply additional expansion ports for media cards of different types.

These objects are achieved by means of the features of the independent claims. Advantageous features are defined in the dependent claims. Further objects and advantages of the invention are apparent in the following detailed description.

### SUMMARY OF THE INVENTION

The proposed solution according to the underlying invention is basically dedicated to the idea of defining a way to decouple mobile SHDs and the internal expansion ports for these portable devices. According to the solution of the underlying invention, the problems mentioned above can be avoided by installing the expansion ports in a separate, external expansion interface. Thereby, the connection between the handheld device and the device providing the external expansion can be established by using a specific radio technology. The required radio equipment could be integrated in the SHD or provided by attaching a radio module to the existing internal expansion port of the SHD.

Since said external expansion interface is placed in the close environment of the SHD, the increased weight for additional media ports and a battery pack can be tolerated. Additionally, by applying this approach, the lifetime of said battery pack can be extended without increasing the total weight of the mobile SHD.

Given a modular design of the external card reader, ports for different types of media cards can be installed and applied to the SHD.

### BRIEF DESCRIPTION OF THE CLAIMS

In general, those skilled in the art will readily recognize that the realization of the underlying invention is not restricted to the above-described examples. Many modifications and variations may be made to the embodiments of the underlying invention disclosed herein without substantially departing from the scope of the invention as defined in the following claims.

The independent claim 1 and the dependent claims 2 to 5 are related to an handheld mobile computing device for operating multimedia applications in a wireless communication network with high-speed access. Thereby, an expansion card port of said handheld mobile computing device is mounted on an external expansion interface connected with the handheld mobile computing device by means of a short-range, low-power radio technology in order to support a communication between an expansion card inserted in the external expansion card port of the external expansion interface and the handheld mobile computing device.

Next, claim 6 and claim 7 refer to an external expansion interface.

Moreover, claim 8 pertain to a method for the registration of an expansion card inserted in the external expansion card port of the external expansion interface.

Finally, the dependent claim 9 refers to a software routine.

### BRIEF DESCRIPTION OF THE DRAWINGS

Further advantages and possible applications of the underlying invention result from the subordinate claims as well as from the following description of the preferred embodiment of the invention which is depicted in the following drawings:
- Fig. 1: shows the general layout 100 of a system architecture comprising one handheld mobile computing device 102 and one external expansion card port 112 of an external expansion interface 110 in a wireless network environment,
- Fig. 2: shows two different block diagrams 200a+b for integrating a Bluetooth radio module 212 (transceiver) in an handheld mobile computing device 102,
- Fig. 3: shows a block diagram 300 which illustrates the structure of the external expansion interface 110,
- Fig. 4: presents a first flowchart showing the data flow for the registration of an expansion card 210 inserted in the external expansion card port 112 of the external expansion interface 110, and
- Fig. 5: presents a second flowchart showing the data flow for the deregistration of an expansion card 210 inserted in the external expansion card port 112 of the external expansion interface 110.

### DETAILED DESCRIPTION OF THE UNDERLYING INVENTION

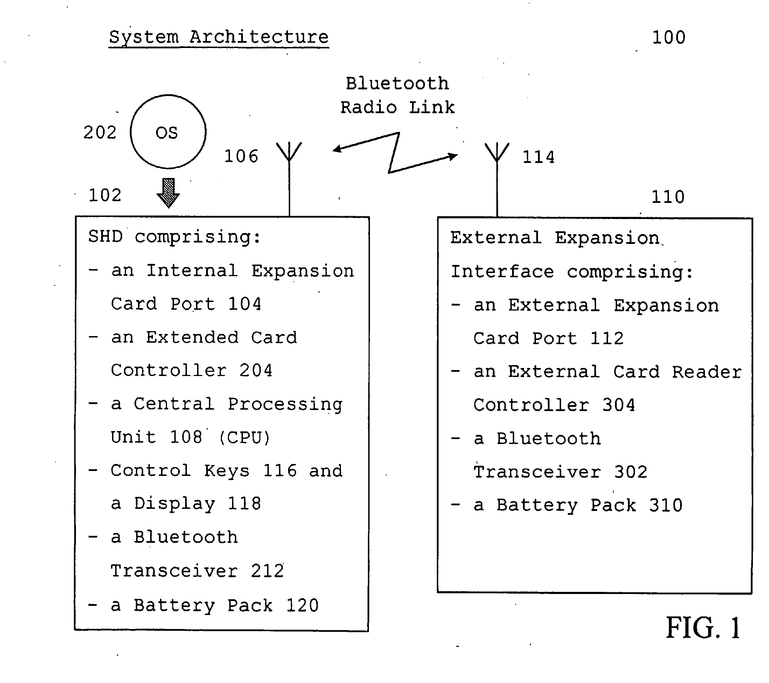

In the following, the preferred embodiment of the underlying invention as depicted in Figs. 1 to 5 shall be explained in detail.

In Fig. 1 an overview diagram is depicted exhibiting the general layout 100 of the system architecture in a wireless network environment comprising the handheld mobile computing device 102 and an external expansion card port 112 which can be used for inserting expansion cards 210 of different types. Thereby, the expansion port 112 is not integrated in the handheld mobile computing device 102, but in a separate external expansion interface 110. Both the handheld mobile computing device 102 and the external expansion card port 112 communicate with each other over a short-range, low-power consumption Bluetooth radio link.

As can be taken from Fig. 1, the handheld mobile computing device 102 comprises:
- RX/TX antenna means 106 for receiving and transmitting modulated RF signals carrying broadband multimedia data from/to the external expansion interface 110, respectively,
- an internal expansion card port 104 which can be used for inserting expansion cards 210 used for providing a connection to a stationary desktop computer by means of a short-range, low-power radio technology as given by Bluetooth,
- an extended card controller 204 for controlling media cards inserted into the external expansion card port 112 of the external expansion interface 110,
- a central processing unit 108 for controlling the functions of said handheld mobile computing device 102,
- control keys 116 for an input of information and an execution of the functions which can be performed by the handheld mobile computing device 102,
- means for displaying text, graphics and video data and/or reproducing audio data,
- a radio module 212 comprising a Bluetooth transceiver mounted on an expansion card 210 used for a communication with the external expansion interface 110, and
- a battery pack 120 used for providing the power supply of the handheld mobile computing device 102.

Aside from the external expansion card port 112, the external expansion interface 110 additionally comprises:
- RX/TX antenna means 114 for receiving and transmitting modulated RF signals carrying broadband multimedia data from/to the handheld mobile computing device 102, respectively,
- a central processing unit 304 for controlling the functions of the external expansion interface 110, serving as an extended card controller for reading expansion cards 210 of a standardized size inserted into the external expansion card port 112 of the external expansion interface 110,
- a radio module 302 comprising a Bluetooth transceiver used for a communication with the handheld mobile computing device 102, and
- a battery pack 310 used for providing the power supply of the external expansion interface 110.

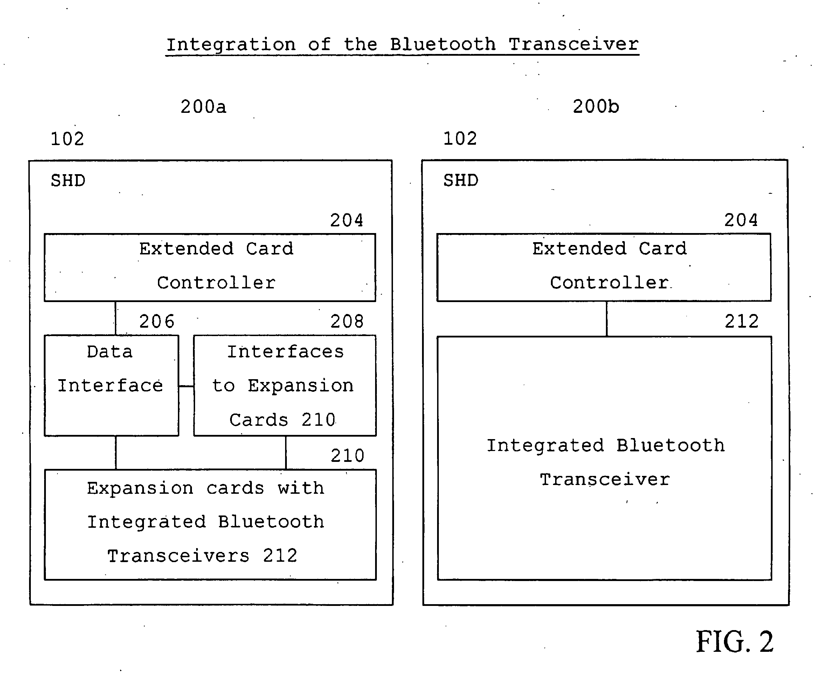

Fig. 2 illustrates two different block diagrams 200a+b for integrating a Bluetooth radio module 212 in an handheld mobile computing device 102. This integration can be achieved by two different solutions 200a+b, installable in the handheld mobile computing device 102 itself or in the existing internal expansion port 104.

According to the first solution 200a, the extended card controller 204 is connected with the expansion cards 210 over a data interface 206 and additional mechanical and/or electronic interfaces 208. By contrast, the extended card controller 204 is directly connected to the radio module 212 with an integrated Bluetooth transceiver according to the second solution 200b.

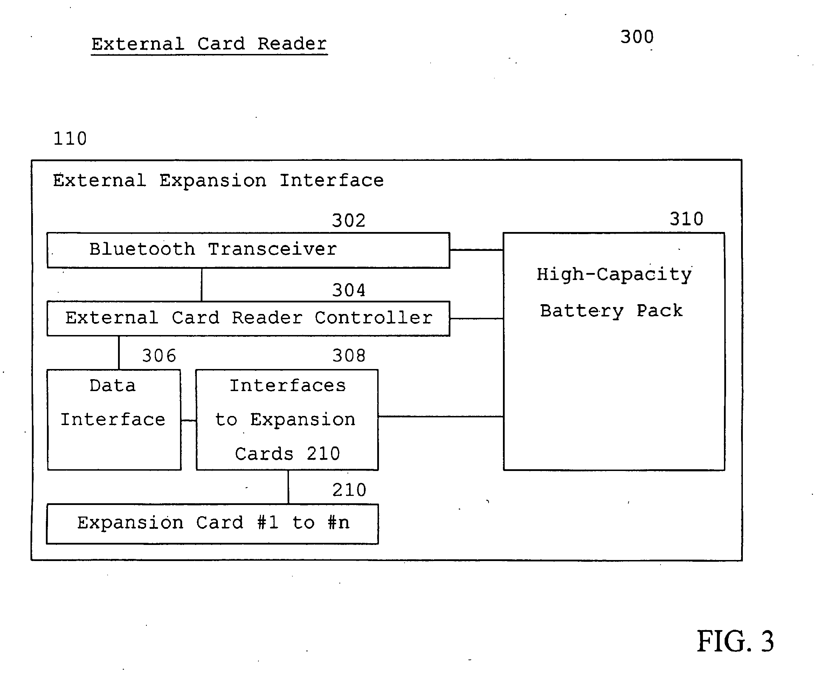

Fig. 3 exhibits a block diagram 300 which illustrates the structure of the external expansion interface 110. Since the external expansion card port 112 communicates over a Bluetooth radio link with the handheld mobile computing device 102, it must also be equipped with the required Bluetooth radio module 302. Each request received over the air interface is transmitted to an appropriate expansion 210 card via the data interface 306, and the response is sent back over the air interface.

Thereby, the central processing unit 304 is connected with the expansion cards 210 over a data interface 306 and additional mechanical and/or electronic interfaces 308.

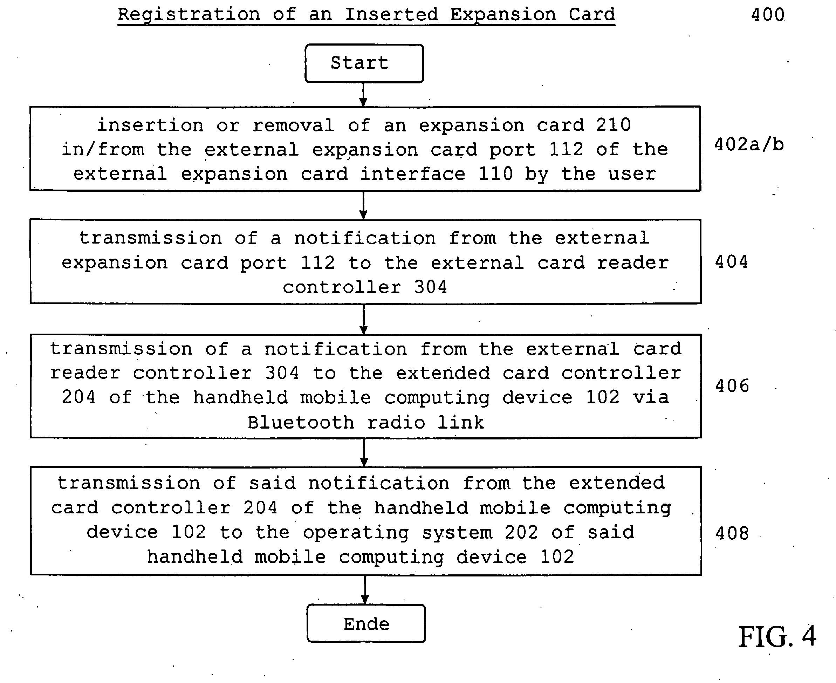

In Fig. 4 a first flowchart showing the data flow for the registration of an expansion card 210 inserted in the external expansion card port 112 of the external expansion interface 110 is presented. After the insertion 402a or removal 402b of an expansion card 210 in/from the external expansion card port 112 of the external expansion interface 110 by the user, the external expansion card port 112 transmits a notification to the external card reader controller 304 in a first step 404. Next, the external card reader controller 304 transmits said notification to the extended card controller 204 of the handheld mobile computing device 102 via Bluetooth radio link in a second step 406. Finally, in the last step 408, said notification is transmitted from the extended card controller 204 of the handheld mobile computing device 102 to the operating system 202 of said handheld mobile computing device 102.

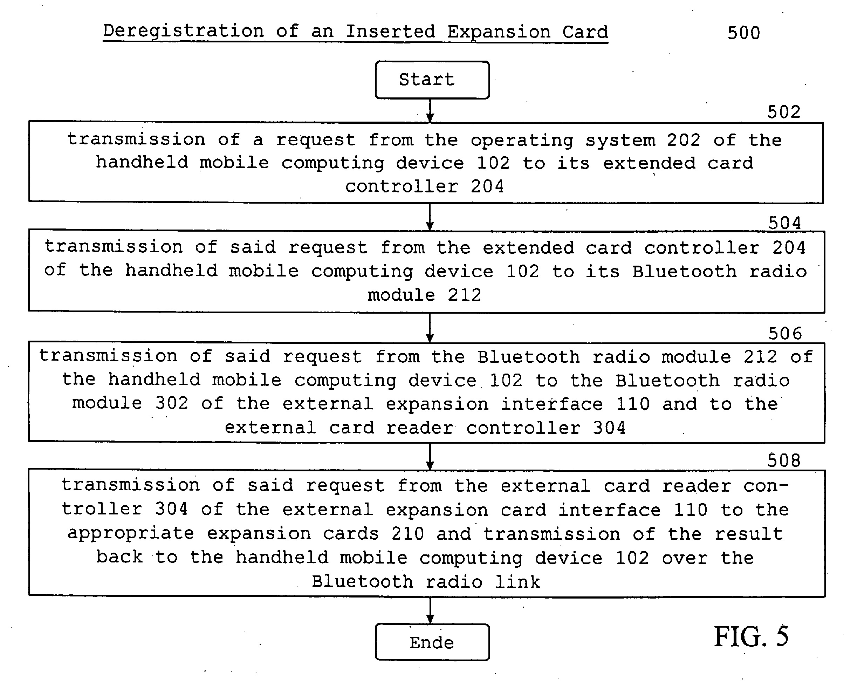

A second flowchart showing the data flow for the deregistration of an expansion card 210 inserted in the external expansion card port 112 of the external expansion interface 110 can be taken from Fig. 5. At first, a request is transmitted from the operating system 202 of the handheld mobile computing device 102 to the extended card controller 204 of said handheld mobile computing device 102 in a first step 502. Next, the extended card controller 204 of the handheld mobile computing device 102 transmits said request to the Bluetooth radio module 212 of the handheld mobile computing device 102 in a second step 504. After that, in a third step 506, said request is transferred from the Bluetooth radio module 212 of the handheld mobile computing device 102 to the associated Bluetooth radio module 302 of the external expansion interface 110 and to the external card reader controller 304. Finally, said request is transferred from the external card reader controller 304 of the external expansion interface 110 to the appropriate expansion cards 210 in the last step 508. The result is sent back to the handheld mobile computing device 102 over the Bluetooth radio link.

The significance of the symbols designated with reference signs as depicted in Figs. 1 to 5 can be taken from the appended table of reference signs.

### Table of the Depicted Features and their Corresponding Reference Signs

| No. | Feature |
|---|---|
| 100 | overview diagram showing the general layout 100 of the system architecture comprising one handheld mobile computing device 102 and one external expansion card port 112 of an external expansion interface 110 in a wireless network environment |
| 102 | handheld mobile computing device |
| 104 | internal expansion card port |
| 106 | RX/TX antenna of the handheld mobile computing device 102 |
| 108 | central processing unit of the handheld mobile computing device 102 for controlling the functions of said device |
| 110 | external expansion interface (= external card reader) |
| 112 | external expansion card port of the external expansion interface 110 |
| 114 | RX/TX antenna of the external expansion interface 110 |
| 116 | control keys for an input of information and an execution of the functions which can be performed by the handheld mobile computing device 102 |
| 118 | means for displaying text, graphics and video data and/or reproducing audio data |
| 120 | high-capacity battery pack for providing the power supply of the handheld mobile computing device 102 |
| 200a | first block diagram showing a first possibility for integrating a Bluetooth radio module 212 comprising an integrated Bluetooth transceiver 212 mounted on an expansion card 210 in an handheld mobile computing device 102 |
| 200b | second block diagram showing a second possibility for integrating a Bluetooth transceiver 212 in an handheld mobile computing device 102 |
| 202 | operating system (OS) of the handheld mobile computing device 102 |
| 204 | extended card controller of the handheld mobile computing device 102 |
| 206 | data interface of the handheld mobile computing device 102 |
| 208 | mechanical and/or electronic interfaces of the handheld mobile computing device to the expansion cards 210 |
| 210 | expansion card with an integrated Bluetooth radio module 212 (transceiver) |
| 212 | integrated Bluetooth radio module (transceiver) mounted on an expansion card 210 |
| 300 | block diagram showing the structure of the external expansion interface 110 |
| 302 | Bluetooth radio module (transceiver) of the external expansion interface 110 |
| 304 | central processing unit (CPU) of the external expansion interface 110 serving as an external card reader controller |
| 306 | data interface of the external expansion interface 110 |
| 308 | mechanical and/or electronic interfaces of the external expansion interface 110 to the expansion cards 210 |
| 310 | high-capacity battery pack of the external expansion interface 110 |
| 400 | first flowchart showing the data flow for the registration of an expansion card 210 inserted in the external expansion card port 112 of the external expansion interface 110 |
| 402a | insertion of an expansion card 210 in the external expansion card port 112 of the external expansion interface 110 by the user |
| 402b | removal of an expansion card 210 from the external expansion card port 112 of the external expansion interface 110 by the user |
| 404 | transmission of a notification from the external expansion card port 112 to the external card reader controller 304 |
| 406 | transmission of a notification from the external card reader controller 304 to the extended card controller 204 of the handheld mobile computing device 102 via Bluetooth radio link |
| 408 | transmission of said notification from the extended card controller 204 of the handheld mobile computing device 102 to the operating system 202 of said handheld mobile computing device 102 |
| 500 | second flowchart showing the data flow for the deregistration of an expansion card 210 inserted in the external expansion card port 112 of the external expansion interface 110 |
| 502 | transmission of a request from the operating system 202 of the handheld mobile computing device 102 to the extended card controller 204 of the handheld mobile computing device 102 |
| 504 | transmission of said request from the extended card controller 204 of the handheld mobile computing device 102 to the Bluetooth radio module 212 of the handheld mobile computing device 102 |
| 506 | transmission of said request from the Bluetooth radio module 212 of the handheld mobile computing device 102 to the associated Bluetooth radio module 302 of the external expansion interface 110 and to the external card reader controller 304 |
| 508 | transmission of said request from the external card reader controller 304 of the external expansion interface 110 to the appropriate expansion cards 210 and transmission of the result back to the handheld mobile computing device 102 over the Bluetooth radio link |

### Glossary

| | |
|---|---|
| Bluetooth | Bluetooth is an attempt to develop a standard for wireless communication over short distances. The Bluetooth Interest Group is a collaboration between a series of companies in mobile telephony and mobile data. |
| EPOC | Abbreviation of "Epoch of Personal Convenience". EPOC is an operating system designed for small wireless computers and telephones. |
| Expansion board | A printed circuit board comprising video adapters, graphic accelerators, sound cards, accelerator boards or internal modems which can be inserted into a computer to extend the capabilities of the computer. |
| Expansion slot | An opening in a computer where a circuit board can be inserted to add new capabilities to the computer. |
| Handheld computer | A portable computer which is small enough to be held in one's hand. |
| Notebook Computer | An extremely lightweight PC. Notebook computers typically weigh less than three kilograms and are small enough to fit easily in a briefcase. |
| PalmOS | An operating system for small, wireless palmtop computers (PDAs). |
| Palmtops | A palmtop is a small computer that literally fits in the palm of a user. |
| PC card | A PC card is a computer device packaged in a small card having the size of a credit card and conforming to the PCMCIA standard. |
| PCMCIA | Abbreviation of "Personal Computer Memory Card International Association". |
| PDA | Abbreviation of "Personal Digital Assistant". |
| PIM | Acronym for "Personal Information Manager". |
| PocketPC | PocketPC is a new version of the Windows CE operating system. |
| Portable computers | A portable computer is a lightweight computer which is small enough to carry. Portable computers include notebook and sub-notebook computers, handheld computers, palmtops and PDAs. |
| Windows CE | Windows CE is based on Microsoft Windows and is used as an operating system in several different types of handheld computers (PDAs). |

## Claims

1. A system, comprising:
- a handheld mobile computing device (102) having an extended card controller (204) for controlling expansion cards (210), and
- an external expansion interface (110) having at least one external expansion card port (112) for expansion cards (210) and an external card reader controller (304),
**characterized in that**
- said external expansion interface (110) is connected to the handheld mobile computing device (102) by means of a wireless link, in order to support a communication between an expansion card (210) inserted in the at least one external expansion card port (112) and the handheld mobile computing device (102),
- said extended card controller (204) of the handheld mobile computing device (102) is adapted to control the expansion cards (210) inserted into said at least one external expansion card port (112) of the external expansion interface (110), and
- said external card reader controller (304) is adapted to transmit a notification to the extended card controller (204) upon the insertion/removal of an expansion card (210) into/from the at least one external expansion card port (112) by means of said wireless link.

2. A system according to claim 1,
**characterized in that**
the handheld mobile computing device (102) comprises at least one internal expansion card port (104) for expansion cards (210).

3. A system according to claim 2,
**characterized in that**
a radio module (212) comprising a transceiver mounted on an expansion card (210) is installed in an internal expansion card port (104) of the handheld mobile computing device (102) .

4. A system according to anyone of claims 1 to 3,
**characterized in that**
the extended card controller (204) of the handheld mobile computing device (102) is connected with the expansion cards (210) over a data interface (206) and additional mechanical and/or electronic interfaces (208).

5. A system according to claim 1,
**characterized in that**
the external card reader controller (304) of the external expansion interface (110) is connected with the expansion cards (210) over a data interface (306) and additional mechanical and/or electronic interfaces (308).

6. An external expansion interface (110) having at least one expansion card port (112) for expansion cards (210) and an external card reader controller (304),
**characterized in that**
- said external expansion interface (110) comprises means for connecting it to a handheld mobile computing device by means of a wireless link, in order to support a communication between an expansion card (210) inserted in the expansion card port (112) and said handheld mobile computing device,
- said external card reader controller (304) is adapted to transmit a notification upon the insertion/removal of an expansion card (210) into/from the expansion card port (112) by means of said wireless link.

7. An external expansion interface (110) according to claim 6,
**characterized in that**
the external card reader controller (304) is connected with the expansion cards (210) over a data interface (306) and additional mechanical and/or electronic interfaces (308).

8. A method for the registration of an expansion card (210) inserted into/removed from an expansion card port (112) of an external expansion interface (110), at a handheld mobile computing device (102),
whereby said external expansion interface (110) is connected with said handheld mobile computing device (102) over a wireless link,
the method comprising the following steps:
- insertion (402a) or removal (402b) of an expansion card (210) in/from the expansion card port (112) of the external expansion interface (110),
- transmission (404) of a notification from the expansion card port (112) to an external card reader controller (304), and
- transmission (406) of a notification from the external card reader controller (304) to an extended card controller (204) of the handheld mobile computing device (102) via said wireless link.

9. A computer software program product,
**characterized in that**
it implements a method according to claim 8 when running on a computing device.

## Patentansprüche

1. System, umfassend:
- ein tragbares mobiles Computergerät (102), das eine erweiterte Kartensteuerung (204) zum Steuern von Erweiterungskarten (210) enthält, und
- eine externe Erweiterungsschnittstelle (110), die mindestens einen externen Erweiterungskartenanschluss (112) für Erweiterungskarten (210) besitzt und eine externe Kartenlesersteuerung (304)
**dadurch gekennzeichnet, dass**
- die externe Erweiterungsschnittstelle (110) mit dem tragbaren mobilen Computergerät (102) über eine drahtlose Verbindung verbunden ist, um eine Kommunikation zwischen einer Erweiterungskarte (210), die in den mindestens einen Erweiterungskartenanschluss (112) eingeführt ist, und dem tragbaren mobilen Computergerät zu unterstützen, und
- die erweiterte Kartensteuerung (204) des tragbaren mobilen Computergeräts (102) geeignet ist um die Erweiterungskarten (210) zu steuern, die in den externen Erweiterungskartenanschluss (112) der externen Erweiterungsschnittstelle (110) eingeführt sind, und
- die externe Kartenlesersteuerung (304) geeignet ist um eine Benachrichtigung zu der erweiterten Kartensteuerung (204) durch die drahtlose Verbindung zu übertragen, nach dem Einführen/Entnehmen einer Erweiterungskarte (210) in/von dem mindestens einen externen Erweiterungskartenanschluss (112).

2. System entsprechend Anspruch 1 **dadurch gekennzeichnet, dass**
das tragbare mobile Computergerät (102) mindestens einen internen Erweiterungskartenanschluss (104) für Erweiterungskarten (210) enthält.

3. System entsprechend Anspruch 2,
**dadurch gekennzeichnet, dass**
ein Funkmodul (212), das einen Sendeempfänger enthält, der auf eine Erweiterungskarte montiert ist, in einen internen Erweiterungskartenanschluss (104) des tragbaren mobilen Computergerätes (102) eingebaut ist.

4. System entsprechend einem der Ansprüche 1 bis 3,
**dadurch gekennzeichnet, dass**
die erweiterte Kartensteuerung (204) des tragbaren mobilen Computergeräts (102) mit den Erweiterungskarten über eine Datenschnittstelle (206) und zusätzliche mechanische und/oder elektronische Schnittstellen (208) verbunden ist.

5. System entsprechend Anspruch 1,
**dadurch gekennzeichnet, dass**
die externe Kartenlesersteuerung (304) der externen Erweiterungsschnittstelle (110) mit den Erweiterungskarten (210) über eine Datenschnittstelle (306) und zusätzliche mechanische und/oder elektrische Schnittstellen (308) verbunden ist.

6. Externe Erweiterungsschnittstelle (110), die mindestens einen
Erweiterungskartenanschluss (112) für Erweiterungskarten (210) und eine externe Kartenlesersteuerung (304) besitzt,
**dadurch gekennzeichnet, dass**
- die externe Erweiterungsschnittstelle (110) Einrichtungen umfasst, um diese an ein geeignetes Computergerät über eine drahtlose Verbindung anzuschließen, um eine Kommunikation zwischen einer Erweiterungskarte (210), die in den
Erweiterungskartenanschluss (112) eingeführt ist, und dem tragbaren mobilen Computergerät zu unterstützen,
- die externe Kartenlesersteuerung (304) geeignet ist, um eine Benachrichtigung durch die drahtlose Verbindung zu übertragen, bei dem Einführen/Entnehmen einer Erweiterungskarte (210) in/von dem Erweiterungskartenanschluss (112).

7. Externe Erweiterungsschnittstelle (110) entsprechend Anspruch 6,
**dadurch gekennzeichnet, dass**
die externe Kartenlesersteuerung (304) mit den Erweiterungskarten (210) über eine Datenschnittstelle (306) und zusätzliche mechanische und/oder elektrische Schnittstellen (308) verbunden ist.

8. Verfahren zum Erkennen einer Erweiterungskarte (210), die in/von einem Erweiterungskartenanschluss (112) einer externen Erweiterungsschnittstelle (110) eingeführt/entfernt ist, an einem tragbaren mobilen Computergerät,
wobei die externe Erweiterungsschnittstelle (110) mit dem tragbaren mobilen Computergerät (102) über eine drahtlose Verbindung verbunden ist, woher das Verfahren die folgenden Schritte umfasst:
- das Einführen (402a) oder Entfernen (402b) einer Erweiterungskarte (210) in/aus einem Erweiterungskartenanschluss (112) der externen Erweiterungsschnittstelle (110),
- die Übertragung (404) einer Benachrichtigung von dem Erweiterungskartenanschluss (112) an eine externe Kartenlesersteuerung (304), und
- die Übertragung (406) einer Benachrichtigung von der externen Kartenlesersteuerung (304) an eine erweiterte Kartensteuerung (204) des tragbaren mobilen Computergeräts über die drahtlose Verbindung.

9. Computer-Softwareprogramm Produkt,
**dadurch gekennzeichnet, dass**
es ein Verfahren entsprechend Anspruch 8 implementiert, wenn es auf einem Computergerät läuft.

## Revendications

1. Système, comprenant :
- un dispositif informatique mobile portatif (102) ayant un contrôleur de cartes étendu (204) pour contrôler des cartes d'extension (210), et
- une interface d'extension externe (110) ayant au moins un port de cartes d'extension externe (112) pour les cartes d'extension (210) et un contrôleur de lecteur de cartes externe (304),
**caractérisé en ce que**
- ladite interface d'extension externe (110) est connectée au dispositif informatique mobile portatif (102) au moyen d'une liaison sans fil, afin de supporter une communication entre une carte d'extension (210) insérée dans le au moins un port de cartes d'extension externe (112) et le dispositif informatique mobile portatif (102),
- ledit contrôleur de cartes étendu (204) du dispositif informatique mobile portatif (102) est adapté pour contrôler les cartes d'extension (210) insérées dans ledit au moins un port de cartes d'extension externe (112) de l'interface d'extension externe (110), et
- ledit contrôleur de lecteur de cartes externe (304) est adapté pour transmettre une notification au contrôleur de cartes étendu (204) lors de l'insertion / retrait d'une carte d'extension (210) dans / du au moins un port de cartes d'extension externe (112) au moyen de ladite liaison sans fil.

2. Système selon la revendication 1, **caractérisé en ce que** le dispositif informatique mobile portatif (102) comprend au moins un port de cartes d'extension interne (104) pour les cartes d'extension (210).

3. Système selon la revendication 2, **caractérisé en ce qu'**un module radio (212) comprenant un émetteur-récepteur monté sur une carte d'extension (210) est installé dans un port de cartes d'extension interne (104) du dispositif informatique mobile portatif (102).

4. Système selon l'une quelconque des revendications 1 à 3, **caractérisé en ce que** le contrôleur de cartes étendu (204) du dispositif informatique mobile portatif (102) est connecté avec les cartes d'extension (210) sur une interface de données (206) et des interfaces mécaniques et / ou électroniques additionnelles (208).

5. Système selon la revendication 1, **caractérisé en ce que** le contrôleur de lecteur de cartes externe (304) de l'interface d'extension externe (110) est connecté avec les cartes d'extension (210) sur une interface de données (306) et des interfaces mécaniques et / ou électroniques additionnelles (308).

6. Interface d'extension externe (110) ayant au moins un port de cartes d'extension (112) pour les cartes d'extension (210) et un contrôleur de lecteur de cartes externe (304),
**caractérisée en ce que**
- ladite interface d'extension externe (110) comprend des moyens pour la connecter à un dispositif informatique mobile portatif au moyen d'une liaison sans fil, afin de supporter une communication entre une carte d'extension (210) insérée dans le port de cartes d'extension (112) et ledit dispositif informatique mobile portatif,
- ledit contrôleur de lecteur de cartes externe (304) est adapté pour transmettre une notification lors de l'insertion / retrait d'une carte d'extension (210) dans / du port de cartes d'extension (112) au moyen de ladite liaison sans fil.

7. Interface d'extension externe (110) selon la revendication 6, **caractérisée en ce que** le contrôleur de lecteur de cartes externe (304) est connecté avec les cartes d'extension (210) sur une interface de données (306) et des interfaces mécaniques et / ou électroniques additionnelles (308).

8. Procédé pour l'enregistrement d'une carte d'extension (210) insérée dans / retirée d'un port de cartes d'extension (112) d'une interface d'extension externe (110), sur un dispositif informatique mobile portatif (102),
moyennant quoi ladite interface d'extension externe (110) est connectée avec ledit dispositif informatique mobile portatif (102) sur une liaison sans fil,
le procédé comprenant les étapes suivantes :
- l'insertion (402a) ou le retrait (402b) d'une carte d'extension (210) dans / du port de cartes d'extension (112) de l'interface d'extension externe (110),
- la transmission (404) d'une notification du port de cartes d'extension (112) à un contrôleur de lecteur de cartes externe (304), et
- la transmission (406) d'une notification du contrôleur de lecteur de cartes externe (304) à un contrôleur de cartes étendu (204) du dispositif informatique mobile portatif (102) via ladite liaison sans fil.

9. Produit de programme logiciel informatique, **caractérisé en ce qu'**il met en oeuvre un procédé selon la revendication 8 lorsqu'il est en exécution sur un dispositif informatique.
